# EUROPÄISCHE PATENTANMELDUNG

(11) **EP 1 870 642 A1**
(43) Veröffentlichungstag der Anmeldung: **26.12.2007**
(21) Anmeldenummer: 06026667.3
(22) Anmeldetag: 22.12.2006
(51) Int. Cl.: F24D 3/14, F24D 13/04

(54) **Flächenheizelement**

(30) Priorität: 19.06.2006 DE 102006028396
(71) Anmelder: Jolly, Jürgen, 66578 Schiffweiler (DE)
(72) Erfinder: Jolly, Jürgen, 66578 Schiffweiler (DE)
(74) Vertreter: Bernhardt, Reinold

(57) **Zusammenfassung**

Die Erfindung betrifft ein Flächenheizelement mit einer flexiblen Trägermatte (1), auf der wenigstens ein mit der Trägermatte (1) verbundenes Rohr (2) zur Durchströmung mit einem Heiz- oder Kühlmedium verlegt ist. Gemäß der Erfindung ist auf der Trägermatte (1) zusätzlich zu dem Rohr (2) ein elektrischer Heizleiter (3) angeordnet und mit der Trägermatte (1) verbunden.

## Beschreibung

Die Erfindung betrifft ein Flächenheizelement mit einer flexiblen Trägermatte, auf der wenigstens ein mit der Trägermatte verbundenes Rohr zur Durchströmung mit einem Heiz- oder Kühlmedium verlegt ist.

Ein aus der EP 0 816 764 A1 bekanntes solches Flächenheizelement weist eine Trägermatte auf, die durch ein Gewebe aus Kunststoff gebildet ist. Die Trägermatte mit dem darauf mäanderförmig verlegten Rohr lässt sich z.B. in eine Bodenestrichschicht einbetten. Durch das Rohr kann ein Heiz- oder Kühlmedium strömen.

Der Erfindung liegt die Aufgabe zugrunde, für ein Flächenheizelement der eingangs erwähnten Art weitere Anwendungsmöglichkeiten zu erschließen.

Diese Aufgabe wird dadurch gelöst, dass auf der Trägermatte zusätzlich zu dem Rohr ein elektrischer Heizleiter angeordnet und mit der Trägermatte verbunden ist.

Vorteilhaft kann bei Mangel an Heizwasser, z.B. außerhalb der normalen Heizperiode, wenigstens vorübergehend Wärme durch den Heizleiter erzeugt werden. Auch mit dem zusätzlich angebrachten Heizleiter kann das Flächenheizelement flexibel und z.B. zu einer Rolle aufwickelbar sein.

Vorzugsweise ist der Heizleiter dem Rohr folgend verlegt, vorzugsweise in Mäanderform.

Zweckmäßig ist der Heizleiter aus Sicherheitsgründen im Abstand zum Rohr verlegt und weist eine isolierende Ummantelung auf.

Der Heizleiter kann unter Bildung einer vorgefertigten Baueinheit mit dem Rohr verbunden sein, so dass der sich mit geringem Arbeitsaufwand gemeinsam mit dem Rohr verlegen und an der Trägermatte befestigen lässt.

Die Erfindung wird nachfolgend anhand eines Ausführungsbeispiels und der beiliegenden, sich auf dieses Ausführungsbeispiel beziehenden Zeichnungen näher erläutert. Es zeigen:

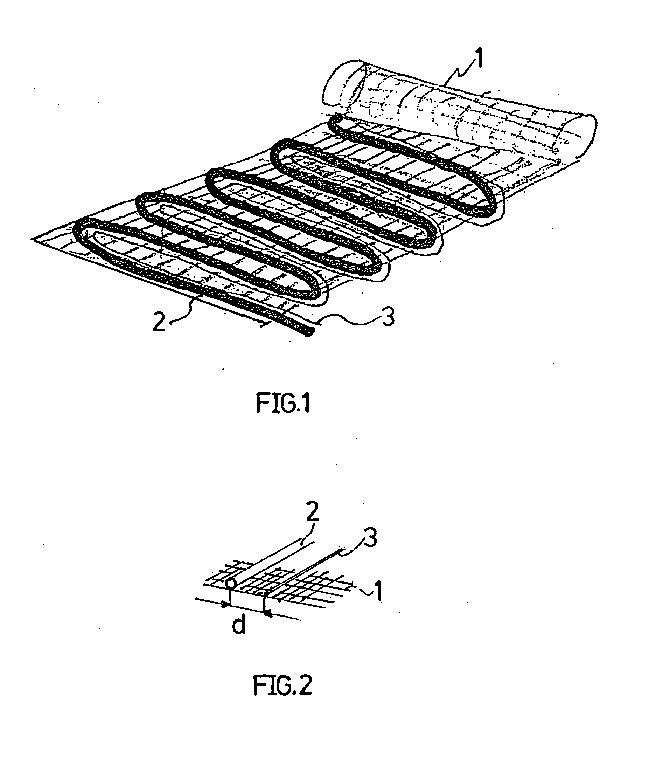

- Fig. 1: ein Flächenheizelement nach der Erfindung, und
- Fig. 2: eine Detailansicht des Flächenheizelements von Fig. 1.

Auf einer bahnförmigen Gewebeträgermatte 1 ist ein flexibles Kunststoffrohr 2 verlegt und mit der Gewebeträgermatte verbunden. Das mäanderförmig verlegte Kunststoffrohr 2 ist zur Durchströmung mit einem Heiz- oder Kühlmedium vorgesehen, insbesondere zur Durchströmung mit Heiz- oder Kühlwasser.

Auf der Gewebeträgermatte 1 ist ferner ein elektrischer Heizleiter 3 angeordnet, welcher dem Kunststoffrohr 2 folgend im Abstand (d) zum Kunststoffrohr verlegt ist. In dem betreffenden Ausführungsbeispiel beträgt der Abstand mehr als 2 cm. Bei dem Heizleiter 3 handelt es sich um einen flexiblen Draht mit einer isolierenden Ummantelung.

Das insgesamt flexible, zu einer Rolle aufwickelbare Flächenheizelement lässt sich z.B. in eine Bodenestrichschicht einbetten. Vorteilhaft durchdringt das Estrichmaterial die Gewebeträgermatte, so dass es zu einer festen Anbindung der Estrichschicht an den Unterboden kommt.

In Fällen, in denen kein oder noch kein Heizwasser zur Durchströmung des Rohrs 2 zur Verfügung steht, lässt sich Wärme durch den Heizleiter 3 erzeugen.

Zweckmäßig kann eine den Heizstrom einstellende Steuerung dafür sorgen, dass die elektrische Heizleistung in dem Maße zurückgenommen wird, wie sich die Heizleistung durch das Heizwasser erhöht. Die Steuerung kann z.B. so erfolgen, dass die Gesamtheizleistung konstant bleibt.

## Patentansprüche

1. Flächenheizelement mit einer flexiblen Trägermatte (1), auf der wenigstens ein mit der Trägermatte (1) verbundenes Rohr (2) zur Durchströmung mit einem Heiz- oder Kühlmedium verlegt ist,
**dadurch gekennzeichnet,**
**dass** auf der Trägermatte (1) zusätzlich zu dem Rohr ein elektrischer Heizleiter (3) angeordnet und mit der Trägermatte (1) verbunden ist.

2. Flächenheizelement nach Anspruch 1,
**dadurch gekennzeichnet,**
**dass** der Heizleiter (3) dem Rohr (2) folgend verlegt ist.

3. Flächenheizelement nach Anspruch 1 oder 2,
**dadurch gekennzeichnet,**
**dass** der Heizleiter (3) im Abstand (d) zu dem Rohr (2) verlegt ist.

4. Flächenheizelement nach einem der Ansprüche 1 bis 3,
**dadurch gekennzeichnet,**
**dass** der Heizleiter (3) eine isolierende Ummantelung aufweist.

5. Flächenheizelement nach einem der Ansprüche 1 bis 4,
**dadurch gekennzeichnet,**
**dass** der Heizleiter (3) einen flexiblen Draht umfasst.

6. Flächenheizelement nach einem der Ansprüche 1 bis 5,
**dadurch gekennzeichnet,**
**dass** der Heizleiter mit dem Rohr verbunden ist.
